# EUROPÄISCHE PATENTANMELDUNG

(11) **EP 1 748 285 A1**
(43) Veröffentlichungstag der Anmeldung: **31.01.2007**
(21) Anmeldenummer: 05016571.1
(22) Anmeldetag: 29.07.2005
(51) Int. Cl.: G01F 23/296

(54) **Ultraschall-Füllstandsmessvorrichtung mit Grenzstandserkennung**

(71) Anmelder: Truma Gerätetechnik GmbH & Co. KG, 85640 Putzbrunn (DE)
(72) Erfinder: Volkwein, Thomas, 85652 Pliening (DE); Urich, Markus, 81739 München (DE); Bornemann, Lars, 83254 Breitbrunn a.Ch. (DE)
(74) Vertreter: Müller - Hoffmann & Partner

(57) **Zusammenfassung**

Eine Vorrichtung zum Erfassen eines Füllstands einer Flüsigkeit in einem Behälter (1) weist einen Ultraschallsender (7) zum Senden von Ultraschallsignalen in die Flüssigkeit und einen Ultraschallempfänger (7) zum Empfangen von wenigstens von einer Oberfläche (2) der Flüssigkeit reflektierten Ultraschallsignalen auf. Es ist wenigstens ein als Festkörper ausgebildeter Haupt-Ultraschallreflektor (6) vorgesehen, der im Bereich eines Hauptschallkegels der Ultraschallsignale im Inneren des Behälters (1) in einer Höhe angeordnet ist, die im Wesentlichen einem vorgegebenen Grenzstandpegel (2) der Flüssigkeit in dem Behälter (1) entspricht. Beim Befüllen des Behälters (1) mit der Flüssigkeit werden die Ultraschallsignale zunächst an der durch die Strömungsbewegung gestörten Flüssigkeitsoberfläche mit wechselnder Intensität und Richtung reflektiert, was zu schwer identifizierbaren und unpräzisen Ultraschallechos führt. Sobald jedoch der Haupt-Ultraschallreflektor (6) vollständig in die Flüssigkeit eingetaucht ist, wird ein stabiles, im Wesentlichen konstantes Ultraschallecho erzeugt. Anhand dieses Echos ist feststellbar, dass der Füllstandspegel der Flüssigkeit wenigstens das Höhenniveau des Haupt-Ultraschallreflektors (6) erreicht hat.

## Beschreibung

Die Erfindung betrifft gemäß dem Oberbegriff von Patentanspruch 1 eine Vorrichtung zum Erfassen eines Füllstands einer Flüssigkeit in einem Behälter.

Aus der EP 0 955 529 A1 ist ein Füllstandsmessgerät bekannt, das den Füllstand eines Mediums in einem Behälter mittels Ultraschall misst. Das Gerät weist einen aus einem Ultraschallsender und einem Ultraschallempfänger bestehenden Ultraschallwandler bzw. Ultraschallsensor auf, der mit Hilfe eines Trägerelements und eines Anpressmechanismus an die Unterseite des Behälters außen angedrückt wird. Über eine Ankoppelschicht zwischen dem Ultraschallwandler und der Wandung des Behälters kann der Ultraschall in das Innere des Behälters eingeleitet werden. Der Ultraschall wird dann an der Phasengrenze zwischen der in dem Behälter gelagerten Flüssigkeit und einem oberhalb der Flüssigkeit vorhandenen gasförmigen Medium reflektiert und zu dem Ultraschallempfänger zurückgeleitet. Aufgrund der Laufzeit des Ultraschallsignals ist es möglich, den Abstand der Phasengrenze vom Ultraschallwandler zu bestimmen und daraus den Füllstand der Flüssigkeit in dem Behälter abzuleiten. Voraussetzung für eine präzise Bestimmung der Füllstandshöhe ist es, dass das Medium, d. h. die Flüssigkeit, sowie dessen Zustand (Druck, Temperatur) bekannt sind, so dass die sich daraus ergebende Ausbreitungsgeschwindigkeit des Schalls in dem Medium feststeht. Andernfalls können durch eine abweichende Schallgeschwindigkeit im Medium Messfehler auftreten.

Beim Befüllen des Behälters ist jedoch meist der Zustand des eingefüllten Mediums und damit auch die Schallgeschwindigkeit im Medium zunächst unbekannt. Bei dem oben beschriebenen Ultraschallmessgerät besteht daher die Gefahr, dass insbesondere ein Grenzstand der Flüssigkeit in dem Behälter nicht präzise genug erkannt werden kann, was zu einer Überfüllung des Behälters führen könnte.

Ein weiteres Problem kann darin bestehen, dass beim Befüllen des Behälters die Oberfläche des Mediums (der Flüssigkeit) nicht parallel zu der Sender-Empfänger-Ebene bzw. senkrecht zu der Hauptausbreitungsrichtung des Ultraschalls steht, so dass das Echo von der Phasengrenze nur zu einem geringen Teil zum Ultraschallwandler zurückgeführt wird. Ein ähnliches Problem entsteht beim Befüllen des Behälters bzw. beim Schwappen der Flüssigkeit in dem Behälter, wenn sich Blasen und Schaum an der Oberfläche bilden können. Hierdurch verändern sich die Reflexionseigenschaften der Phasengrenze zwischen der Flüssigkeit und dem Gas, so dass die Ultraschallsignale gestreut werden. Auch dadurch kann der Anteil des zu dem Ultraschallwandler zurückreflektierten Ultraschallsignals zu gering für eine präzise, sichere Detektion werden.

Die geschilderten Probleme können besonders beim Befüllen von Autogastanks nachteilig sein. In mit Autogas betriebenen Kraftfahrzeugen ist ein Tank vorgesehen, in dem Autogas, insbesondere Flüssiggas, wie z. B. Propan oder Butan, gelagert wird. Aufgrund der temperaturabhängigen Volumenausdehnung des Flüssiggases dürfen die Tanks nur bis etwa 80 Vol.-% gefüllt werden. Dann besteht für das Flüssiggas noch genügend Raum, um sich bei steigenden Temperaturen auszudehnen. Bei einer Überfüllung über den vorgegebenen Grenzstand hinaus besteht ein erhebliches Sicherheitsrisiko, dass bei einem Temperaturanstieg der Druck im Tank rapide ansteigt, sobald die Flüssigkeit aufgrund der temperaturbedingten Ausdehnung den zur Verfügung stehenden Raum im Tank ganz ausfüllt, so dass der Tank schließlich bersten kann bzw. Flüssiggas über ein Überdruckrohr ausgelassen wird.

Es ist bekannt, eine Überfüllsicherung dadurch zu erreichen, dass ein Schwimmer, der meist auch für die Füllstandsermittlung bei niedrigeren Füllständen verwendet wird, beim Erreichen der 80 %-Volumengrenze den Befüllstutzen mechanisch verschließt. Das mechanische Wirkprinzip ist jedoch aufgrund der bewegten Teile störungsanfällig. Zum Beispiel enthält Autogas Verunreinigungen und längerkettige Kohlenwasserstoffe, die sich über längere Zeit in dem Behälter und damit auch an der Mechanik des Schwimmersystems ansammeln können, was zu einer Funktionsbeeinträchtigung, z. B. durch Verkleben, führen kann. Auch die andauernden Erschütterungen und Schwingungen, denen die Tanks in Kraftfahrzeugen ausgesetzt sind, können die Mechanik beschädigen.

Andere Methoden der Füllstands- und Grenzstandserkennung nutzen eine elektrische Signalübertragung in den Flüssiggastank hinein bzw. heraus. Aufgrund grundsätzlicher sicherheitstechnischer Erwägungen bestehen hier Bedenken.

Der Erfindung liegt die Aufgabe zugrunde, eine Vorrichtung zum Erfassen eines Füllstands einer Flüssigkeit in einem Behälter anzugeben, mit der eine in weiten Grenzen vom Zustand der Flüssigkeit unabhängige, zeitnahe, exakte und zuverlässige Grenzstandsdetektion, insbesondere bei Befüllvorgängen, unter Verwendung eines Ultraschall-Messverfahrens ermöglicht wird.

Erfindungsgemäß wird die Aufgabe durch eine Vorrichtung nach Anspruch 1 gelöst. Vorteilhafte Weiterentwicklungen der Erfindung sind in den abhängigen Ansprüchen definiert.

Eine erfindungsgemäße Vorrichtung zum Erfassen eines Füllstands einer Flüssigkeit in einem Behälter ist dadurch gekennzeichnet, dass wenigstens ein als Festkörper ausgebildeter Haupt-Ultraschallreflektor vorgesehen ist, der im Bereich eines Hauptschallkegels der von einem Ultraschallsender abgegebenen Ultraschallsignale im Inneren des Behälters in einer Höhe angeordnet ist, die im Wesentlichen einem vorgegebenen Grenzstandpegel der Flüssigkeit in dem Behälter entspricht.

Aufgrund technischer Randbedingungen ist es dem Fachmann geläufig, für einen Behälter einen Grenzstandpegel, wie z. B. 80 Vol.-% des Gesamtvolumens des Behälters vorzugeben. Die Flüssigkeit darf also nur maximal bis zu dem Grenzstandpegel eingefüllt werden. Erfindungsgemäß ist nun der Haupt-Ultraschallreflektor, der z. B. durch ein im Wesentlichen ebenes Blech gebildet werden kann, in Höhe des Grenzstandspegels bzw. dicht darunter angeordnet.

Die Frequenz der Ultraschallwelle ist dabei vorzugsweise so gewählt, dass eine Schallausbreitung im Festkörper, nämlich durch die Behälterwand, sowie in der Flüssigkeit erfolgen kann, in der Gasphase jedoch nicht bzw. nur stark vermindert.

Beim Befüllen des Behälters werden die vorzugsweise von einem an der Unterseite einer Außenwandung des Behälters angeordneten Ultraschallsender abgegebenen Ultraschallsignale in den Behälter eingeleitet und durch die Flüssigkeit übertragen, bis das Ultraschallsignal an der Flüssigkeitsoberfläche reflektiert und zu einem mit dem Ultraschallsender vorzugsweise eine Einheit bildenden Ultraschallempfänger zurückgeführt. Während des Befüllens des Behälters ist es möglich, dass das reflektierte Ultraschallsignal aufgrund der undefinierten verwirbelten bzw. turbulenten Flüssigkeitsoberfläche unklar ist. In dem Moment jedoch, wo der Flüssigkeitsstand so hoch ist, dass der Haupt-Ultraschallreflektor in die Flüssigkeit eingetaucht wird, bewirkt der Haupt-Ultraschallreflektor ein stabiles Ultraschallecho, das hinsichtlich seiner Laufzeit und seiner Intensität im Wesentlichen, d. h. innerhalb zulässiger Toleranzen unveränderlich ist. Für den Bediener ist es dann leicht möglich zu erkennen, dass dieses stabile Ultraschallecho von dem Haupt-Ultraschallreflektor stammt und demgemäß der Haupt-Ultraschallreflektor in die Flüssigkeit eingetaucht ist. Dies wird als Indiz dafür genommen, dass die Flüssigkeit den zulässigen Grenzstandpegel erreicht hat und der Befüllungsvorgang beendet werden muss.

Es liegt auf der Hand, dass der Haupt-Ultraschallreflektor nicht exakt auf der Höhe des maximal zulässigen Grenzstandpegels liegen sollte, sondern etwas niedriger, um Toleranzen bei der Befüllung (Wellen- und Schaumbildung) sowie einer Verarbeitungszeit der Ultraschallsignale bzw. einer Reaktionszeit des Bedieners oder einer später noch erläuterten Auswerteeinrichtung Rechnung zu tragen. Demgemäß kann es ohne weiteres zweckmäßig sein, den Haupt-Ultraschallreflektor in einem Bereich anzubringen, der bei 80 oder 90 % des Abstands zwischen dem Ultraschallsender/Ultraschallempfänger und dem vorgegebenen Grenzstandpegel liegt.

Die Festlegung der Höhenlage des Haupt-Ultraschallreflektors liegt im Ermessen des Fachmanns, um sicherzustellen, dass der Grenzstandpegel der Flüssigkeit in dem Behälter auf keinen Fall überschritten wird. Hier ist unter anderem auch die vorgesehene Befüllungsgeschwindigkeit zu berücksichtigen. Der Haupt-Ultraschallreflektor wird vorzugsweise in Form eines Blechs ausgeführt, das mechanisch fest und definiert gehalten wird. Durch den Haupt-Ultraschallreflektor wird ein vorgegebener Teil des von dem Ultraschallsender in Form eines Schallkegels oder einer Schallkeule abgegebenen Ultraschallsignals reflektiert, sobald die Flüssigkeit den Raum zwischen dem Ultraschallsender/Ultraschallwandler (Behälterboden) und dem Haupt-Ultraschallreflektor ausfüllt.

Unabhängig von der horizontalen Ausrichtung des Behälters und unabhängig von einem Schwanken bzw. Schwappen der Flüssigkeit, von Wellen auf der Oberfläche der Flüssigkeit oder von Schaumbildung werden die Ultraschallsignale von dem Ultraschallreflektor nahezu konstant zurückgeworfen, sobald der Raum zwischen dem Behälterboden und dem Ultraschallreflektor vollständig mit Flüssigkeit gefüllt ist. Dabei weisen die von dem Ultraschallreflektor zurückgeworfenen Ultraschallsignale von hintereinander erfolgenden Messzyklen jeweils exakt die gleichen Laufzeiten auf. Im Gegensatz dazu sind die von hintereinander erfolgenden Messzyklen erfassten Ultraschallechos, die von der Flüssigkeitsoberfläche herrühren, gerade während des Befüllvorgangs aufgrund des Schwankens der Oberfläche zeitlichen Schwankungen unterworfen. Zudem liegt im Allgemeinen nicht zu jedem Messzyklus ein Ultraschallecho der Flüssigkeitsoberfläche vor, da teilweise die von der Flüssigkeitsoberfläche reflektierten Ultraschallsignale nicht oder nicht in ausreichender Intensität zum Ultraschallwandler zurückkehren.

Vorzugsweise sind der Ultraschallsender und der Ultraschallempfänger zu einem Ultraschallsensor bzw. Ultraschallwandler zusammengefasst. Der Ultraschallwandler bildet dann eine Einheit, wie sie z. B. aus der EP 0 955 529 Al bekannt ist.

Der Ultraschallwandler, wenigstens aber der Ultaschallsender oder der Ultraschallempfänger ist vorzugsweise außen, insbesondere an der Unterseite der Wandung des Behälters angeordnet. Auf diese Weise können die Ultraschallsignale von der Unterseite des Behälters aus nahezu vertikal nach oben gerichtet ausstrahlen, um im Wesentlichen senkrecht auf die Flüssigkeitsoberfläche zu treffen.

Bei einer besonders vorteilhaften Ausführungsform der Erfindung ist wenigstens ein als Festkörper ausgebildeter Hilfs-Ultraschallreflektor im Bereich des Hauptschallkegels (Schallkeule des Ultraschallsenders) angeordnet. Der Hilfs-Ultraschallreflektor ist dabei mit einem Abstand zu dem Ultraschallsender positioniert, der geringer ist als der Abstand zwischen dem Ultraschallsender und dem Haupt-Ultraschallreflektor. Im Übrigen kann der Hilfs-Ultraschallreflektor in gleicher Weise als Blech gestaltet sein, wie der Haut-Ultraschallreflektor. Der Hilfs-Ultraschallreflektor ermöglicht es, auch Zwischenstände des Füllstands der Flüssigkeit in dem Behälter zu erkennen. Insbesondere dann, wenn mehrere Hilfs-Ultraschallreflektoren in dem Behälter angeordnet werden, können nahezu beliebige Zwischen-Füllstände insbesondere beim Befüllen des Behälters bestimmt werden (viertel voll, halb voll, dreiviertel voll etc.).

Dabei ist es besonders vorteilhaft, wenn wenigstens ein Teil der Ultraschallreflektoren (Haupt-Ultraschallrelektoren bzw. Hilfs-Ultraschallreflektoren) bezüglich einer Zentralachse des Hauptschallkegels versetzt angeordnet ist, derart, dass jeweils ein möglichst ungehinderter Signalverlauf der Ultraschallsignale zwischen dem Ultraschallsender, einem jeden der betreffenden Ultraschallreflektoren und dem Ultraschallempfänger erreicht wird. Die verschiedenen Ultraschallreflektoren sollten also jeweils mit "Sichtkontakt" zu dem Ultraschallsender und dem Ultraschallempfänger stehen, so dass für jeden Ultraschallreflektor der ihm zugewiesene Teil von Ultraschallsignalen zuverlässig reflektiert werden kann. Insbesondere sollte vermieden werden, dass ein Ultraschallreflektor Ultraschallsignale reflektiert, die eigentlich einem anderen, dahinterliegenden Ultraschallreflektor zugedacht waren.

Vorzugsweise sind die Abstände der Ultraschallreflektoren zu dem Ultraschallsender und/oder zu dem Ultraschallempfänger derart bemessen, dass kein Abstand ein ganzzahliges Vielfaches eines anderen Abstandes beträgt. Auf diese Weise kann sich kein Ultraschallecho eines Ultraschallreflektors durch mehrfaches Hin- und Herlaufen im Behälter mit einem Ultraschallecho eines anderen Ultraschallreflektors überlagern. Vielmehr laufen die Ultraschallechos zeitlich versetzt zu dem Ultraschallempfänger zurück und können so eindeutig identifiziert und den jeweiligen Ultraschallreflektoren zugeordnet werden, sobald beide Reflektoren in die Flüssigkeit eintauchen.

Bei geschickter Wahl der Abstände der Ultraschallreflektoren kann eine geometrische "Kodierung" erreicht werden, die in homogenen Medien bei konstanter Schallgeschwindigkeit einer entsprechenden zeitlichen Kodierung der Ultraschallechos entspricht.

Bei einer besonders vorteilhaften Ausführungsform der Erfindung ist eine Auswerteeinrichtung vorgesehen, zum Überprüfen von Laufzeiten und/oder Intensitäten von Ultraschallsignalen in mehreren nacheinander erfolgenden Messzyklen auf eine zeitliche Varianz oder Invarianz. Die Auswerteeinrichtung überprüft somit die Laufzeiten bzw. Intensitäten der Ultraschallsignale anhand der Ultraschallechos. Sofern ein Ultraschallecho stets im Wesentlichen die gleiche Laufzeit benötigt, wird eine Invarianz festgestellt. Wenn ein Ultraschallecho hinsichtlich seiner Laufzeit jedoch veränderlich ist, wird dies als zeitliche Varianz verstanden. Da Ultraschallmessungen aufgrund zahlreicher Streueffekte prinzipbedingt unscharf sind, ist es dem Fachmann geläufig, die zeitliche Varianz oder Invarianz innerhalb sinnvoll bestimmter Toleranzbereiche zu definieren.

Sofern sich die Laufzeiten bzw. Intensitäten von Ultraschallsignalen in mehreren nacheinander erfolgenden Messzyklen in einem vorgegebenen Toleranzbereich nicht ändern, also invariant sind, werden sie als von den Ultraschallreflektoren (Haupt- oder Hilfs-Ultraschallreflektoren) stammende Ultraschallechos angesehen. Wie oben dargelegt, ist der Abstand zwischen den Ultraschallreflektoren und dem Ultraschallsensor konstant, so dass auch die Laufzeiten der Ultraschallsignale im Wesentlichen konstant sein müssen. Veränderungen, die sich z. B. aufgrund einer Erwärmung der Flüssigkeit ergeben können, fallen dabei normalerweise nicht ins Gewicht, da sie zu langsam erfolgen, als dass sie in kurz nacheinander erfolgenden Messzyklen erfasst werden könnten.

Wenn die Auswerteeinrichtung hingegen Ultraschallsignale empfängt, deren Laufzeiten oder Intensitäten sich in mehreren nacheinander erfolgenden Messzyklen über einen vorgegebenen Toleranzbereich hinaus ändern, werden diese als von einem Füllstandspegel, insbesondere von einer Oberfläche der Flüssigkeit stammende Ultraschallechos, interpretiert. Die Dauer der Messzyklen bzw. der zeitliche Abstand zwischen den Messzyklen sollte dabei allerdings nicht zu kurz gewählt werden, um z. B. das Ansteigen oder Schwanken der Oberfläche der Flüssigkeit (Flüssigkeitspegel) beim Befüllvorgang erkennen zu können. Sofern nämlich die Messzyklen zu kurz sind, könnten die Veränderungen der Laufzeit der Ultraschallsignale derart gering sein, dass ihre Veränderungen innerhalb des vorgegebenen Toleranzbereichs liegen und daher nicht als Veränderung wahrgenommen werden.

Die Auswertung der Laufzeiten bzw. Intensitäten in der Auswerteeinrichtung kann mit Hilfe einer geeigneten Software erfolgen. Die dafür zu ergreifenden Maßnahmen sind dem Fachmann geläufig und müssen daher nicht weiter vertieft werden.

Vorzugsweise ist eine Temperaturerfassungseinrichtung zum Erfassen einer Temperatur der Flüssigkeit vorgesehen. Die Temperaturerfassungseinrichtung kann als in dem Ultraschallwandler integrierter Temperatursensor realisiert sein, um die temperaturabhängige Schallgeschwindigkeit in der Flüssigkeit bei der Messung korrekt berücksichtigen zu können.

Bei einer besonders vorteilhaften Weiterentwicklung der Erfindung kann eine weitere Auswerteeinrichtung vorgesehen sein, mit der eine Schallgeschwindigkeit der Ultraschallsignale in der Flüssigkeit bestimmbar ist, aufgrund einer Signallaufzeit von Ultraschallsignalen, die zwischen dem Ultraschallsender, einem der Ultraschallreflektoren, dessen Abstand zu dem Ultraschallsender und zu dem Ultraschallempfänger vorbekannt ist, und dem Ultraschallempfänger verlaufen. Aufgrund des vorbekannten Abstands des betreffenden Ultraschallreflektors lässt sich anhand der Signallaufzeit die Schallgeschwindigkeit in der Flüssigkeit präzise bestimmen. Dies ist insbesondere zum Kalibrieren der Vorrichtung, vor allem beim Befüllen des Behälters sinnvoll, wie nachfolgend noch erläutert wird.

Die Auswerteeinrichtung ist vorzugsweise derart weitergebildet, dass ein vorbekannter Zusammenhang zwischen Temperatur, Schallgeschwindigkeit und Art bzw. Zusammensetzung der Flüssigkeit speicherbar ist. Dabei ist zu berücksichtigen, dass die Vorrichtung insbesondere auch zur Messung eines Füllstands in einem Flüssiggastank eingesetzt werden kann. Flüssiggas wird jedoch in unterschiedlichen Zusammensetzungen bereitgestellt. So bestehen bekannte Flüssiggase aus 100% Propan oder 100% Butan bzw. beliebigen Mischungsverhältnissen zwischen Propan und Butan. Je nach Zusammensetzung ändert sich die Schallausbreitungsgeschwindigkeit, sofern man eine konstante Temperatur voraussetzt. Mit zunehmendem Butan-Anteil steigt die Schallgeschwindigkeit. In einem Flüssiggas mit konstanter Zusammensetzung sinkt die Schallgeschwindigkeit mit zunehmender Temperatur.

Die genauen Zusammenhänge zwischen Schallgeschwindigkeit, Temperatur und Zusammensetzung der Flüssigkeit bzw. Art der Flüssigkeit (es können auch andere Flüssigkeiten außer Flüssiggasen verwendet werden) sind dementsprechend in Form von Formeln, Algorithmen, Tabellen, Kennlinien oder Kennfeldern in der Auswerteeinrichtung gespeichert.

Die Auswerteeinrichtung ist vorteilhafterweise derart ausgebildet, dass durch sie aufgrund der - wie oben beschrieben - erfassten Temperatur und der ermittelten Schallgeschwindigkeit die Art der Flüssigkeit und/oder die Zusammensetzung der Flüssigkeit bestimmen kann. Dies ist insbesondere in der Kalibrier-Phase, also während oder kurz nach dem Befüllen des Behälters zweckmäßig, um eine präzise Auskunft über die eingefüllte Flüssigkeit zu erhalten.

Die Auswerteeinrichtung kann weiterhin in besonders vorteilhafter Weise derart ausgebildet sein, dass durch sie aufgrund der jeweils aktuell erfassten Temperatur und der vorher in der Kalibrier-Phase ermittelten oder anderweitig vorbekannten Art und/oder Zusammensetzung der Flüssigkeit die jeweils aktuelle Schallgeschwindigkeit bestimmbar ist. Sofern also - z.B. in der Kalibrier-Phase - die Zusammensetzung der Flüssigkeit erkannt wurde, kann durch die Auswerteeinrichtung nachfolgend auch bei einer sich ändernden Temperatur stets die tatsächliche, aktuelle Schallgeschwindigkeit ermittelt werden. Dies ist auch dann möglich, wenn keiner der Ultraschallreflektoren von Flüssigkeit überspült wird, sodass kein Ultraschallecho von einem Ultraschallreflektor vorliegt.

Die Ultraschallreflektoren, insbesondere auch die näher zu dem Ultraschallwandler angeordneten Hilfs-Ultraschallreflektoren ermöglichen somit, dass die Vorrichtung präzise kalibriert und an die jeweils eingefüllte Flüssigkeit angepasst wird, sodass auch dann, wenn die für die Bestimmung der Schallgeschwindigkeit hilfreiche Referenzinformation von den Ultraschallreflektoren nicht mehr vorliegt, eine zuverlässige Messung des Abstands zwischen dem Ultraschallwandler und der Flüssigkeitsoberfläche, also der Füllstandshöhe, möglich ist.

Die zur Ermittlung der Art der Flüssigkeit und der Schallgeschwindigkeit dienende Auswerteeinrichtung kann mit der weiter oben beschriebenen, zum Überprüfen der Signallaufzeiten dienenden Auswerteeinrichtung zu einer einzigen Auswerteeinrichtung zusammengefasst werden.

Vorzugsweise weist wenigstens einer der Ultraschallreflektoren eine Reflexionsfläche auf, deren Lotvektor zu dem Ultraschallsender und/oder zu dem Ultraschallempfänger gerichtet ist. Dadurch ist gewährleistet, dass ein erheblicher Teil des auf den Ultraschallreflektor auftreffenden Ultraschallsignals wieder zu dem Ultraschallempfänger zurückreflektiert wird.

Bei einer anderen vorteilhaften Ausführungsform der Erfindung weist wenigstens einer der Ultraschallreflektoren eine Reflexionsfläche auf, deren Lotvektor nicht zu dem Ultraschallsender und/oder zu dem Ultraschallempfänger gerichtet ist. Vielmehr ist es besonders vorteilhaft, wenn die Reflexionsfläche dieses Ultraschallreflektors bezüglich der Hauptrichtung zu dem Ultraschallempfänger derart geneigt ist, dass ein erheblicher Teil des Signals nicht zu dem Ultraschallempfänger zurückreflektiert wird, um Mehrfachreflexionen zu vermeiden. Lediglich ein Teil der Ultraschallsignale trifft noch auf den Ultraschallempfänger, allerdings mit einem Winkel, so dass das zwangsläufig von dem Ultraschallempfänger zurückreflektierte Signal nicht mehr auf den Ultraschallreflektor treffen kann, sondern seitlich aus dem System heraustritt.

Bei einer besonders vorteilhaften Ausführungsform der Erfindung ist im Inneren des Behälters wenigstens ein Rohrelement vorgesehen ist, dessen Mittelachse parallel und/oder koaxial zu einer Zentralachse des Ultraschallkegels verläuft, derart, dass wenigstens ein Teil des Ultraschall- bzw. Hauptschallkegels in dem Rohrelement verläuft bzw. durch das Rohrelement geführt wird. Das Rohrelement stellt dann sicher, dass ein wesentlicher Teil des Ultraschallsignals entlang der Mittelachse verläuft und nicht seitlich auslaufen kann, was Störsignale oder Signalverlust hervorrufen könnte.

Das Innere des Rohrelements steht in kommunizierender Verbindung mit dem Inneren des Behälters, derart, dass die Flüssigkeit auch in dem Inneren des Rohrelements steht. Damit liegt in dem Rohrelement der gleiche aktuelle Flüssigkeitsstand an, wie außerhalb des Rohrelements in dem restlichen Behälter. Jedoch wird die Flüssigkeit in dem Rohrelement beruhigt und zeigt somit ein geringeres Schwankungsverhalten als außerhalb des Rohrelements. Der Anteil der vom Ultraschallwandler ausgesandten und von der Flüssigkeitsoberfläche reflektierten Ultraschallwellen wird dadurch erhöht. Gleichzeitig werden die zeitlichen Schwankungen von in aufeinanderfolgenden Messzyklen enthaltenen Echos vermindert. Dadurch kann die Genauigkeit der Füllstands- und Grenzstandsermittlung erhöht werden.

Weiterhin kann das Rohrelement als Träger für wenigstens einen der Ultraschallreflektoren, insbesondere aber für alle Ultraschallreflektoren dienen, die dann im Inneren des Rohrelements angeordnet sein sollten. Dazu ist das Rohrelement an seiner zu dem Ultraschallsender und dem Ultraschallempfänger zugewandten Stirnseite des Rohrelements offen, so dass die Ultraschallsignale ungehindert in das Rohrelement eintreten und in dem Rohrelement durch die dort angeordneten Ultraschallreflektoren reflektiert werden können.

Alternativ dazu kann auch wenigstens einer der Ultraschallreflektoren außerhalb des Rohrelements angeordnet sein, damit dass von ihm rückgestrahlte Ultraschallecho von dem im Rohrelement angeordneten Ultraschallreflektor unterschieden werden kann.

Vorzugsweise läuft eine Wandung des Rohrelements an der dem Ultraschallsender zugewandten Stirnseite bezüglich der Mittelachse des Rohrelements schräg aus, so dass Ultraschallwellen, die auf die Wandung auftreffen, seitlich reflektiert werden, um eine Reflexion zum Ultraschallempfänger zu vermeiden.

Bei einer bevorzugten Ausführungsform weist eine dem Ultraschallsender abgewandte Seite des Rohrelements eine Öffnung auf, wodurch Gasblasen beim Befüllen des Behälters nach oben austreten können.

Bei einer besonders vorteilhaften Ausführungsform der Erfindung bilden der Ultraschallsender, der Ultraschallempfänger und der Haupt-Ultraschallreflektor mit einer Tragstruktur eine bauliche Einheit. Somit können die Bauelemente in einfacher Weise vormontiert und als eine Einheit an bzw. in dem Behälter befestigt bzw. von diesem wieder gelöst werden.

Vorzugsweise sind der Ultraschallsender, der Ultraschallempfänger und der Haupt-Ultraschallreflektor über eine wenigstens teilweise außerhalb des Behälters angeordnete Tragstruktur gehalten. Dadurch ist es möglich, den Ultraschallsender und den Ultraschallempfänger von außen an die Behälterwandung in einer definierten Position anzulegen und zu halten. Dabei kann eine Positionier- und Andrückeinrichtung verwendet werden, wie sie z. B. in der EP 0 955 529 Al oder in der DE 103 31 044 Al beschrieben ist.

Bei einer besonders vorteilhaften Ausführungsform der Erfindung ist in dem Behälter ein Überdruckrohr vorgesehen, wie es z. B. bei Autogastanks zur Standardausrüstung gehört. Das Überdruckrohr kann erfindungsgemäße gleichzeitig eine Tragstruktur bilden, an der wenigstens einer der Ultraschallreflektoren befestigt ist. Auch das Rohrelement kann an der Tragstruktur befestigt sein.

Bei einer weiteren vorteilhaften Ausführungsform der Erfindung ist wenigstens einer der Ultraschallreflektoren und/oder das Rohrelement an der Wandung des Behälters befestigt. Dabei ist es möglich, die Befestigung bereits im Zuge des Herstellungsprozesses des Behälters vorzunehmen und die Bauelemente z. B. an der Innenwand des Behälters anzuschweißen. Damit ist eine exakte Positionierung insbesondere der Ultraschallreflektoren sichergestellt. Der Ultraschallwandler hingegen kann später an der vorgegebenen Stelle an der Außenseite des Behälters angebracht werden.

Die erfindungsgemäße Vorrichtung kann in besonders vorteilhafter Weise bei einer einen Flüssiggasbehälter aufweisenden Autogas-Tankanlage in einem Kraftfahrzeug verwendet werden.

Ein erfindungsgemäßes Verfahren zum kontinuierlichen Erfassen eines Füllstands einer Flüssigkeit in einem Behälter nutzt die oben beschriebene Vorrichtung. Das Verfahren sieht eine Kalibrier-Phase vor, in der zunächst eine Temperatur der Flüssigkeit erfasst wird. Aufgrund einer Signallaufzeit von Ultraschallsignalen zu einem Ultraschallreflektor, dessen Abstand zu dem Ultraschallsender und zu dem Ultraschallempfänger vorbekannt ist, wird die Schallgeschwindigkeit in der Flüssigkeit ermittelt. Aufgrund der somit erfassten Temperatur und Schallgeschwindigkeit sowie anhand eines vorbekannten, z.B. in der Vorrichtung hinterlegten Zusammenhangs zwischen Temperatur, Schallgeschwindigkeit und Art bzw. Zusammensetzung der Flüssigkeit wird die Art der Flüssigkeit und/oder ihre Zusammensetzung bestimmt. Damit ist die Vorrichtung für die nachfolgende, sich unter Umständen über den gesamten Zeitraum der Entleerung des Behälters erstreckende Mess-Phase kalibriert, weil eine Information über die Art der Flüssigkeit vorliegt.

In der nachfolgenden Mess-Phase wird weiterhin die Temperatur der Flüssigkeit erfasst. Aufgrund der aktuellen Temperatur und der vorher in der Kalibrier-Phase ermittelten oder auch anderweitig vorbekannten Art und/oder Zusammensetzung wird mit Hilfe des vorbekannten und in der Vorrichtung hinterlegten Zusammenhangs zwischen Temperatur, Schallgeschwindigkeit und Art bzw. Zusammensetzung der Flüssigkeit die Schallgeschwindigkeit jeweils aktuell ermittelt. Dadurch können insbesondere Änderungen der Schallgeschwindigkeit aufgrund von Temperaturänderungen berücksichtigt werden.

Schließlich wird in der Messphase anhand der vorher bzw. parallel ermittelten Schallgeschwindigkeit und einer gemessenen Signallaufzeit zwischen dem Ultraschallsender, der Flüssigkeitsoberfläche und dem Ultraschallempfänger der tatsächliche Abstand der Flüssigkeitsoberfläche und damit die Füllstandshöhe ermittelt.

Diese und weitere Vorteile und Merkmale der Erfindung werden nachfolgend anhand von Beispielen unter Zuhilfenahme der begleitenden Figuren näher erläutert. Es zeigen:
- **Fig. 1**: einen Schnitt durch einen Flüssiggastank mit einer erfindungsgemäßen Vorrichtung zum Bestimmen eines Flüssigkeits-Füllstands;
- **Fig. 2**: eine andere Ausführungsform der Vorrichtung von Fig. 1;
- **Fig. 3**: wiederum eine andere Ausführungsform der Vorrichtung mit mehreren Ultraschallreflektoren;
- **Fig. 4**: ebenfalls eine andere Ausführungsform der Vorrichtung, mit einem Rohrelement zum Führen des Ultraschallkegels; und
- **Fig. 5**: eine weitere Ausführungsform der Erfindung.

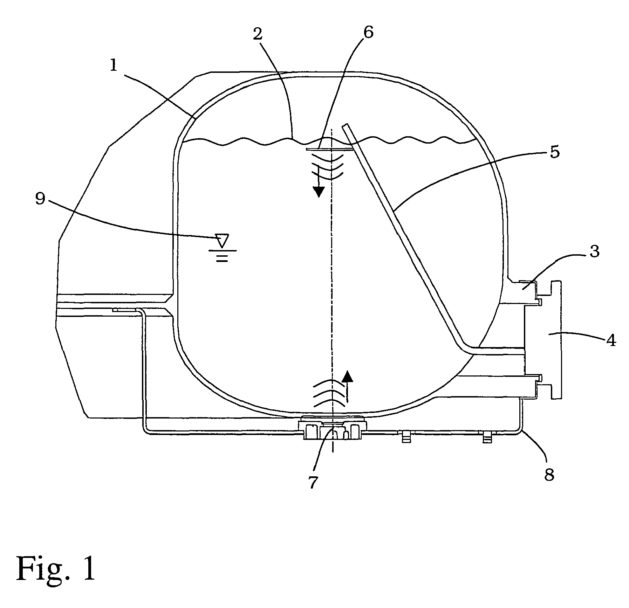

Die Fig. 1 bis 5 zeigen jeweils den gleichen Schnitt durch einen als Behälter 1 dienenden Füssiggastank, der z. B. in einer Autogastankanlage zum Einsatz kommen kann.

Der Behälter 1 ist mit einer Flüssigkeit, z. B. Flüssiggas, gefüllt, deren Grenzpegelstand mit 2 gekennzeichnet ist. Über den Grenzpegelstand 2 hinaus sollte keine Flüssigkeit in den Behälter 1 eingefüllt werden.

An einem zu dem Behälter 1 gehörenden Flansch 3 ist außen eine Halterung 4 befestigt, von der aus sich ein Träger 5 in das Innere des Behälters 1 erstreckt. An dem Träger 5 ist ein Blech befestigt, das sich im Wesentlichen horizontal erstreckt und einen Haupt-Ultraschallreflektor 6 bildet.

Aufgrund der starren Verbindung zwischen der Halterung 4, dem Träger 5 und dem Haupt-Ultraschallreflektor 6 ist die Lage, insbesondere die Höhenlage des Haupt-Ultraschallreflektors 6, im Verhältnis zu dem Behälter 1 fest definiert. Die Lage entspricht einem Bereich, der von der Flüssigkeit im Behälter 1 gerade eben überspült wird, wenn die Flüssigkeit ihren Grenz-Pegelstand 2 erreicht, wie in Fig. 1 gezeigt. In jedem Fall ist es prinzipbedingt erforderlich, dass wenigstens ein Teil des Raumes in dem Behälter 1 beim Befüllen ungenutzt bleibt, um einen Expansionsraum für die Flüssigkeit, insbesondere bei deren Erwärmen zu gewährleisten.

An der Unterseite des Behälters 1 ist ein Ultraschallwandler 7 angeordnet, der durch eine Haltevorrichtung 8 in vordefinierter Position gehalten und zuverlässig gegen die Unterseite des Behälters von außen angedrückt wird. Die Haltevorrichtung 8 kann z. B. einer Haltevorrichtung gemäß der DE 103 31 044 Al oder der EP 0 955 529 Al entsprechen und ein Federblech aufweisen, mit dem der Ultraschallwandler 7 mit einer vorbestimmten Kraft angedrückt wird.

Der Ultraschallwandler 7 enthält einen Ultraschallsender, mit dem Ultraschall in Form einer Schallkeule bzw. einem Hauptschallpegel senkrecht nach oben (in Fig. 1) generiert wird. Weiterhin ist in dem Ultraschallwandler 7 ein Ultraschallempfänger zum Empfangen von reflektierten Ultraschallsignalen (Ultraschallechos) vorgesehen.

Die von dem Ultraschallwandler 7 abgegebenen Ultraschallsignale werden durch die direkte Ankopplung des Ultraschallwandlers an die Wandung des Behälters 1 durch selbige in die Flüssigkeit im Inneren des Behälters 1 übertragen. Dort setzt sich das Ultraschallsignal in der Flüssigkeit fort, bis die Oberfläche der Flüssigkeit am Pegelstand 2 erreicht wird. Von dort aus werden die Ultraschallsignale reflektiert und gelangen schließlich zu dem Ultraschallempfänger im Ultraschallwandler 7, um danach ausgewertet zu werden.

Da der Haupt-Ultraschallreflektor 6 in die Flüssigkeit eingetaucht ist, reflektiert er ebenfalls das Ultraschallsignal. Aufgrund der Tatsache, dass der Haupt-Ultraschallreflektor 6 vorzugsweise ein Blech mit glatter Oberfläche ist, wird ein erheblicher Anteil der Ultraschallsignale reflektiert und kann nach Auswertung deutlich als "Peak" erkannt werden. Im Gegensatz dazu sind die von der Flüssigkeitsoberfläche am Pegelstand 2 reflektierten Signale teilweise störungsbehaftet, schwach und indifferent. Dies gilt insbesondere dann, wenn der Behälter 1 gerade mit Flüssigkeit befüllt wird und die Flüssigkeitsoberfläche demgemäß sich in Unruhe befindet.

Wenn hingegen die Flüssigkeit den Behälter 1 nur teilweise füllt und demgemäß die Flüssigkeitsoberfläche auf Höhe eines Zwischenpegels 9 steht, befindet sich der Haupt-Ultraschallreflektor 6 außerhalb der Flüssigkeit und kann von den Ultraschallsignalen nicht erreicht werden. Demgemäß besteht die Möglichkeit, dass bei der Auswertung der Ultraschallsignale kein prägnantes bzw. stillstehendes Echosignal erkannt wird. Erst dann, wenn der Haupt-Ultraschallreflektor 6 durch Erreichen eines entsprechenden Flüssigkeits-Füllstands in die Flüssigkeit eintaucht, entsteht auf einer mit dem Ultraschallwandler 7 gekoppelten Anzeigeeinrichtung ein deutlich erkennbares, stillstehendes Signal, was den Bediener oder einer nachgeschalteten Auswerteeinrichtung die Information vermittelt, dass der Flüssigkeitsstand die entsprechende Höhe (oberhalb vom Haupt-Ultraschallreflektor 6) erreicht hat. Sinnvollerweise kann dann die Befüllung des Behälters 1 abgebrochen werden, um eine Überfüllung zu vermeiden.

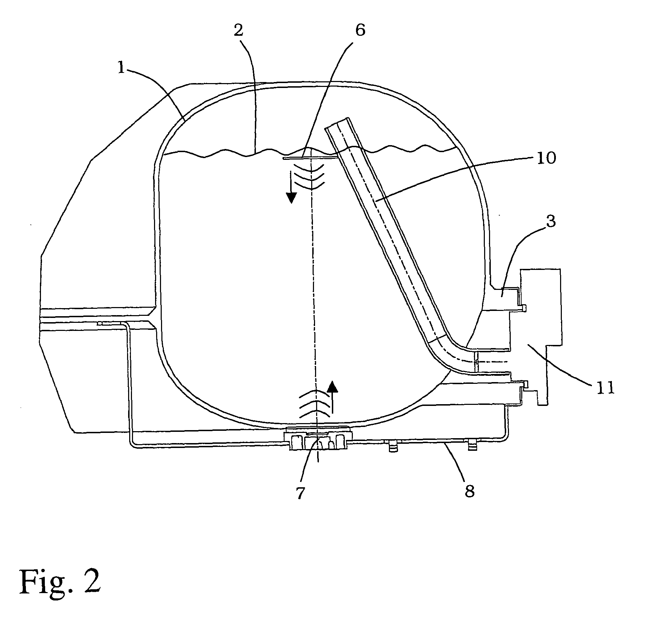

Fig. 2 zeigt eine ähnliche Ausführungsform wie Fig. 1. Jedoch wird es sich dort zunutze gemacht, dass insbesondere bei Autogastanks ein Überdruckrohr 10 zur Standardausstattung gehört, über welches nötigenfalls Gas austreten kann, um einen gefährlichen Überdruck im Inneren des Behälters 1 zu vermeiden. Das Überdruckrohr 10 kann Bestandteil eines Multiventils 11 sein. Genau diese kritische Situation jedoch soll mit Hilfe der erfindungsgemäßen Vorrichtung vermieden werden, weil diese zuverlässig das Erreichen des Grenzstandpegels ermöglicht, sodass rechtzeitig der Befüllvorgang abgebrochen werden kann. Eine gefährliche Überfüllung des Behälters 1 und damit das Entstehen von Überdrücken kann durch die diese "Füllstop-Funktion" vermieden werden.

An dem Überdruckrohr 10 ist der Haupt-Ultraschallreflektor 6 in analoger Weise befestigt und positioniert, wie bei der Ausführungsform in Fig. 1.

Diese Ausführungsform hat den Vorteil, dass an oder in dem Behälter 1 keine Änderungen gegenüber einem konventionellen Autogastank vorgenommen werden müssen. Das Überdruckrohr 10 wird als Tragstruktur für den Haupt-Ultraschallreflektor 6 genutzt. Es sind keine zusätzlichen Tragstrukturen oder Befestigungselemente erforderlich, um den Haupt-Ultraschallreflektor 6 zu halten.

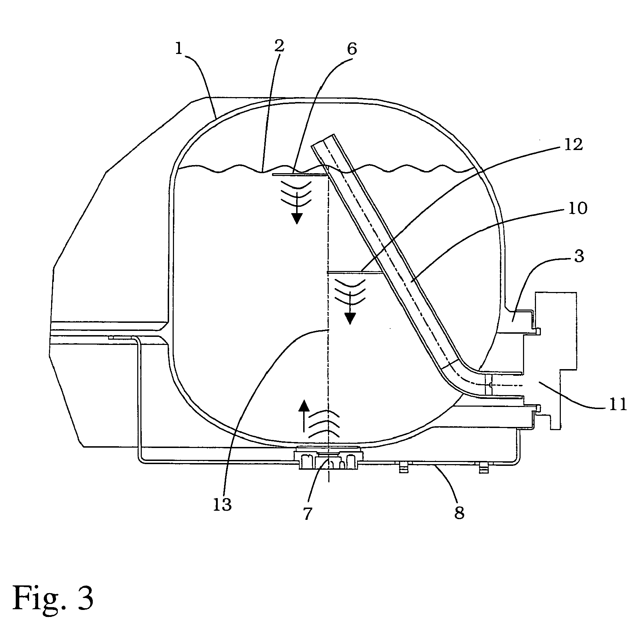

Fig. 3 zeigt eine weitere Ausführungsform der Erfindung, die sich von der in Fig. 2 gezeigten Variante dadurch unterscheidet, dass außer dem Haupt-Ultraschallreflektor 6 ein weiterer Reflektor als Hilfs-Ultraschallreflektor 12 vorgesehen ist. Der Hilfs-Ultraschallreflektor 12 kann ebenfalls als Blech ausgebildet sein, das an dem Überdruckrohr 10 oder einer anderen Tragstruktur im Inneren des Behälters 1 gehalten ist.

Während der Haupt-Ultraschallreflektor 6 definitionsgemäß zum Erfassen des Grenzstandes der Flüssigkeit dient (z. B. 80 Vol.-% Füllung), kann der Hilfs-Ultraschallreflektor 12 zum Erkennen eines Zwischenstandes (z. B. 50 Vol.-% Füllung) genutzt werden. Der Hilfs-Ultraschallreflektor 12 erzeugt ebenso wie der Haupt-Ultraschallreflektor 6 ein prägnantes Echosignal, das bei der Auswertung leicht erkannt werden kann. Es wird jedoch nur dann gebildet, wenn der Hilfs-Ultraschallreflektor 12 in Flüssigkeit eingetaucht ist.

Der Haupt-Ultraschallreflektor 6 und der Hilfs-Ultraschallreflektor 12 sind bezüglich einer Zentralachse 13 derart versetzt angeordnet, dass sie jeweils ungehindert einen Teil der von dem Ultraschallwandler 7 abgegebenen Ultraschallwellen empfangen und reflektieren können. Jedenfalls befindet sich der Haupt-Ultraschallreflektor 6 größtenteils nicht im Schatten von dem Hilfs-Ultraschallreflektor 12.

Selbstverständlich können mehrere Hilfs-Ultraschallreflektoren 12 in unterschiedlichen Höhen im Inneren des Behälters 1 angebracht werden, sofern Informationen über Zwischen-Füllstände gewünscht sind. Zur Vermeidung von Signalüberlagerungen durch Mehrfachreflexionen sollte jedoch keiner der Abstände zwischen dem Ultraschallwandler 7 und den Ultraschallreflektoren ein ganzzahliges Vielfaches eines anderen Abstandes betragen. Dann ist eine präzise Erkennung jedes einzelnen Ultraschallreflektors möglich, sofern er in Flüssigkeit eingetaucht ist.

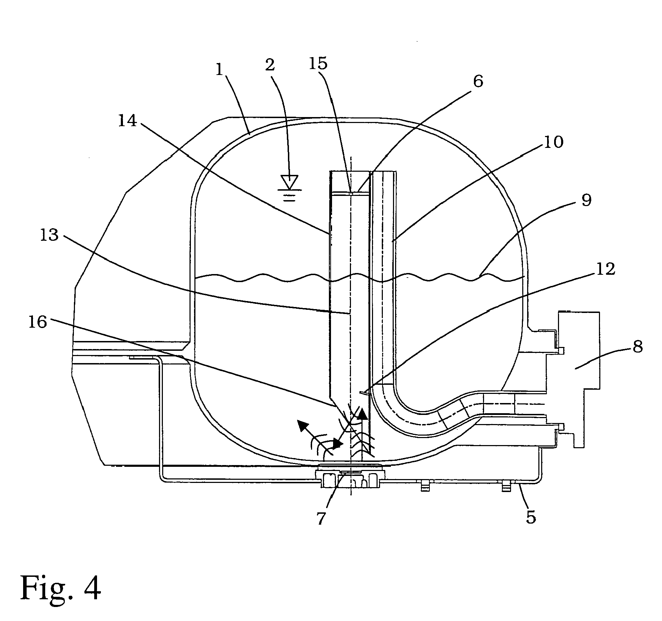

Fig. 4 zeigt eine weitere Ausführungsform, bei der sich - im Gegensatz zu den Figuren 2 und 3 - das Überdruckrohr 10 über einen erheblichen Teil im Inneren des Behälters 1 vertikal erstreckt.

An dem Überdruckrohr 10 ist ein Rohrelement 14 befestigt, dessen Mittelachse mit der Zentralachse 13 des Schallkegels von dem Ultraschallwandler 7 zusammenfällt. Das Rohrelement 14 sowie die Ultraschallreflektoren 6, 12 sollten aus einem geeigneten Material bestehen, z. B. Aluminium, Messing oder glasfaserverstärktem Kunststoff.

Das Rohrelement 14 ist an seiner unteren, dem Ultraschallwandler 7 zugewandten stirnseitigen Ende offen, so dass die Ultraschallwellen in das Rohrelement 14 eindringen und von diesem geführt werden können. Im Inneren des Rohrelements 14 sind der Haupt-Ultraschallreflektor 6 und der Hilfs-Ultraschallreflektor 12 befestigt, so dass die eintretenden Ultraschallwellen in gleicher Weise wie oben beschrieben zurück zu dem Ultraschallwandler 7 reflektiert werden können.

Dadurch, dass die Unterseite des Rohrelements 14 offen ist, steht das Innere des Rohrelements 14 in kommunizierender Verbindung mit dem restlichen Teil des Behälters 1, so dass der Flüssigkeitsstand im Inneren des Rohrelements 14 dem im restlichen Behälter 1 entspricht. Sofern sich jedoch beim Befüllen des Behälters 1 starke Wellen auf der Oberfläche der Flüssigkeit ausbilden, werden diese durch das Rohrelement 14 beruhigt, so dass im Inneren des Rohrelements 14 eine deutlich reduzierte Wellenbildung auftritt.

An der Oberseite, am dem Ultraschallwandler 7 abgewandten Ende des Rohrelements 14, ist wenigstens eine Belüftungsöffnung 15 vorgesehen, so dass Gas entweichen kann, um eine tatsächliche kommunizierende Wirkung zwischen dem Inneren und dem Äußeren des Rohrelements 14 zu gewährleisten. Die Belüftungsöffnung 15 kann z. B. in dem Blech des Haupt-Ultraschallreflektors 6 ausgebildet sein.

Das dem Ultraschallwandler 7 zugewandte stirnseitige Ende des Rohrelements 14 weist eine Anschrägung 16 auf. Auf diese Weise wird erreicht, dass der Teil der Ultraschallwellen, der auf die Stirnseite der Wandung des Rohrelements 14 auftrifft, nicht mehr zurück zum Ultraschallwandler 7 reflektiert wird, wo es im Folgenden zu Mehrfachreflexionen kommen kann, sondern schräg zurückreflektiert wird und dementsprechend nicht mehr von dem Ultraschallwandler 7 registriert wird. In gleicher Weise ist der Hilfs-Ultraschallreflektor 12 leicht schräg gestellt, so dass er nur noch einen Teil der Ultraschallwellen zu dem Ultraschallwandler 7 zurückreflektiert, während ein anderer Teil derart reflektiert wird, dass er nicht mehr am weiteren Messgeschehen Teil nimmt. Der schräg reflektierte Impulsanteil wird aus der Zentralachse 13 ausgekoppelt und kann somit nicht mehr über weitere Reflexionen, insbesondere an den Ultraschallreflektoren 6, 12 als Signal auftreten.

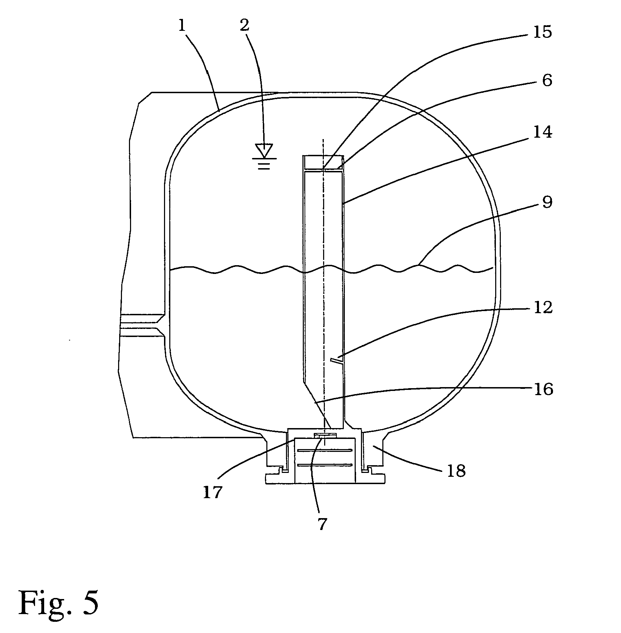

Während das Rohrelement 14 bei der in Fig. 4 gezeigten Ausführungsform an dem Überdruckrohr 10 befestigt ist, zeigt Fig. 5 eine weitere Ausführungsform, bei der das Rohrelement 14 über einen Träger 17 fest mit dem Ultraschallwandler 7 verbunden ist. Der Träger 17 kann an einem an der Unterseite des Behälters 1 vorgesehenen Flansch 18 befestigt werden. Der Ultraschallwandler 7 bildet zusammen mit dem Träger 17 und dem Rohrelement 14 sowie den im Inneren des Rohrelements vorgesehenen Ultraschallreflektoren 6, 12 eine von dem Behälter 1 trennbare Baugruppe.

Mit der erfindungsgemäßen Vorrichtung wird ein zuverlässiger Grenzstandswächter und Überfüllungsschutz angegeben, der weder mechanisch bewegte Teile noch eine elektrische Signalübertragung im Inneren des Behälters 1 benötigt.

## Patentansprüche

1. Vorrichtung zum Erfassen eines Füllstands einer Flüssigkeit in einem Behälter (1), mit
- einem Ultraschallsender (7) zum Senden von Ultraschallsignalen in die Flüssigkeit; und mit
- einem Ultraschallempfänger (7) zum Empfangen von wenigstens von einer Oberfläche (2) der Flüssigkeit reflektierten Ultraschallsignalen;
**dadurch gekennzeichnet, dass**
- wenigstens ein als Festkörper ausgebildeter Haupt-Ultraschallreflektor (6) vorgesehen ist, der im Bereich eines Hauptschallkegels der Ultraschallsignale im Inneren des Behälters (1) in einer Höhe angeordnet ist, die im Wesentlichen einem vorgegebenen Grenzstandpegel (2) der Flüssigkeit in dem Behälter (1) entspricht.

2. Vorrichtung nach Anspruch 1, **dadurch gekennzeichnet, dass** wenigstens ein als Festkörper ausgebildeter Hilfs-Ultraschallreflektor (12) im Bereich des Hauptschallkegels angeordnet ist, wobei der Hilfs-Ultraschallreflektor (12) mit einem Abstand zu dem Ultraschallsender (7) angeordnet ist, der geringer ist als der Abstand zwischen dem Ultraschallsender (7) und dem Haupt-Ultraschallreflektor (6).

3. Vorrichtung nach Anspruch 1 oder 2, **dadurch gekennzeichnet, dass** die Abstände der Ultraschallreflektoren (6, 12) zu dem Ultraschallsender (7) und/oder zu dem Ultraschallempfänger (7) derart bemessen sind, dass kein Abstand ein ganzzahliges Vielfaches eines anderen Abstandes beträgt.

4. Vorrichtung nach einem der Ansprüche 1 bis 3, **dadurch gekennzeichnet, dass** eine Auswerteeinrichtung vorgesehen ist, zum Überprüfen von Laufzeiten und/oder Intensitäten von Ultraschallsignalen in mehreren nacheinander erfolgenden Messzyklen auf eine zeitliche Varianz oder Invarianz.

5. Vorrichtung nach Anspruch 4, **dadurch gekennzeichnet, dass** durch die Auswerteeinrichtung Ultraschallsignale als von den Ultraschallreflektoren (6, 12) stammende Ultraschallechos erkennbar sind, wenn sich die Laufzeiten und/oder Intensitäten dieser Ultraschallsignale in mehreren nacheinander erfolgenden Messzyklen in einem vorgegebenen Toleranzbereich nicht ändern.

6. Vorrichtung nach Anspruch 4 oder 5, **dadurch gekennzeichnet, dass** durch die Auswerteeinrichtung Ultraschallsignale als von einem Füllstandspegel, insbesondere von der Oberfläche der Flüssigkeit, stammende Ultraschallechos erkennbar sind, wenn sich die Laufzeiten und/oder Intensitäten dieser Ultraschallsignale in mehreren nacheinander erfolgenden Messzyklen über einen vorgegebenen Toleranzbereich hinaus ändern.

7. Vorrichtung nach einem der Ansprüche 1 bis 6, **dadurch gekennzeichnet, dass** eine Temperaturerfassungseinrichtung zum Erfassen einer Temperatur der Flüssigkeit vorgesehen ist.

8. Vorrichtung nach einem der Ansprüche 1 bis 7, **dadurch gekennzeichnet, dass** eine Auswerteeinrichtung vorgesehen ist, mit der eine Schallgeschwindigkeit der Ultraschallsignale in der Flüssigkeit bestimmbar ist, aufgrund einer Signallaufzeit von Ultraschallsignalen, die zwischen dem Ultraschallsender (7), einem der Ultraschallreflektoren (6, 12), dessen Abstand zu dem Ultraschallsender (7) und zu dem Ultraschallempfänger (7) vorbekannt ist, und dem Ultraschallempfänger (7) verlaufen.

9. Vorrichtung nach Ansprüchen 7 und 8, **dadurch gekennzeichnet, dass**
- in der Auswerteeinrichtung ein vorbekannter Zusammenhang zwischen Temperatur, Schallgeschwindigkeit und Art bzw. Zusammensetzung der Flüssigkeit speicherbar ist; und dass
- die Auswerteeinrichtung derart ausgebildet ist, dass durch sie aufgrund der erfassten Temperatur und der ermittelten Schallgeschwindigkeit die Art der Flüssigkeit und/oder eine Zusammensetzung der Flüssigkeit bestimmbar ist.

10. Vorrichtung nach einem der Ansprüche 7 bis 9, **dadurch gekennzeichnet, dass**
- in der Auswerteeinrichtung ein vorbekannter Zusammenhang zwischen Temperatur, Schallgeschwindigkeit und Art bzw. Zusammensetzung der Flüssigkeit speicherbar ist; und dass
- die Auswerteeinrichtung derart ausgebildet ist, dass durch sie aufgrund der jeweils aktuell erfassten Temperatur und der ermittelten oder vorbekannten Art und/oder Zusammensetzung der Flüssigkeit die jeweils aktuelle Schallgeschwindigkeit bestimmbar ist.

11. Vorrichtung nach einem der Ansprüche 1 bis 10, **dadurch gekennzeichnet, dass** wenigstens einer der Ultraschallreflektoren (12) eine Reflexionsfläche aufweist, deren Lotvektor nicht zu dem Ultraschallsender (7) und/oder zu dem Ultraschallempfänger (7) gerichtet ist.

12. Vorrichtung nach einem der Ansprüche 1 bis 11, **dadurch gekennzeichnet, dass**
- im Inneren des Behälters (1) wenigstens ein Rohrelement (14) vorgesehen ist, dessen Mittelachse parallel und/oder koaxial zu einer Zentralachse (13) des Schallkegels verläuft, derart, dass wenigstens ein Teil des Schallkegels in dem Rohrelement (14) verläuft bzw. durch das Rohrelement (14) geführt wird;
- eine zu dem Ultraschallsender (7) und dem Ultraschallempfänger (7) zugewandte Stirnseite des Rohrelements (14) offen ist; und dass
- das Innere des Rohrelements (14) in kommunizierender Verbindung mit dem Inneren des Behälters (1) steht, derart, dass die Flüssigkeit auch in dem Inneren des Rohrelements (14) steht.

13. Vorrichtung nach Anspruch 12, **dadurch gekennzeichnet, dass** wenigstens einer der Ultraschallreflektoren (6, 12), insbesondere alle Ultraschallreflektoren (6, 12) in dem Rohrelement (14) angeordnet sind.

14. Vorrichtung nach Anspruch 12 oder 13, **dadurch gekennzeichnet, dass** wenigstens einer der Ultraschallreflektoren (6, 12) außerhalb des Rohrelements (14) angeordnet ist.

15. Vorrichtung nach einem der Ansprüche 1 bis 14, **dadurch gekennzeichnet, dass** der Ultraschallsender (7), der Ultraschallempfänger (7) und der Haupt-Ultraschallreflektor (6) mit einer Tragstruktur (5, 4, 8; 14, 17, 18) eine bauliche Einheit bilden.

16. Vorrichtung nach Anspruch 15, **dadurch gekennzeichnet, dass** die bauliche Einheit von dem Behälter (1) lösbar ist.

17. Vorrichtung nach einem der Ansprüche 1 bis 16, **dadurch gekennzeichnet, dass** wenigstens einer der Ultraschallreflektoren (6, 12) durch eine an dem Behälter lösbar befestigte Tragstruktur gehalten ist.

18. Vorrichtung nach einem der Ansprüche 1 bis 17, **dadurch gekennzeichnet, dass** ein sich in das Innere des Behälters erstreckendes Überdruckrohr (10) vorgesehen ist und eine Tragstruktur bildet, an der wenigstens einer der Ultraschallreflektoren (6, 12) befestigt ist.

19. Vorrichtung nach einem der Ansprüche 15 bis 18, **dadurch gekennzeichnet, dass** das Rohrelement (14) an der Tragstruktur (10) befestigt ist.

20. Verwendung einer Vorrichtung nach einem der vorstehenden Ansprüche bei einer einen Flüssiggasbehälter aufweisenden Autogas-Tankanlage für ein Kraftfahrzeug.

21. Verfahren zum kontinuierlichen Erfassen eines Füllstands einer Flüssigkeit in einem Behälter mit einer Vorrichtung nach einem der Ansprüche 1 bis 19, wobei in einer Kalibrier-Phase
- eine Temperatur der Flüssigkeit erfasst wird;
- eine Schallgeschwindigkeit ermittelt wird aufgrund einer Signallaufzeit von Ultraschallsignalen, die zwischen dem Ultraschallsender (7), einem der Ultraschallreflektoren (6, 12), dessen Abstand zu dem Ultraschallsender (7) und zu dem Ultraschallempfänger (7) vorbekannt ist, und dem Ultraschallempfänger (7) verlaufen; und wobei
- aufgrund der erfassten Temperatur, der ermittelten Schallgeschwindigkeit und eines vorbekannten Zusammenhangs zwischen Temperatur, Schallgeschwindigkeit und Art bzw. Zusammensetzung der Flüssigkeit die Art der Flüssigkeit und/oder eine Zusammensetzung der Flüssigkeit bestimmt wird.

22. Verfahren nach Anspruch 21, **dadurch gekennzeichnet, dass** in einer nach der Kalibrier-Phase erfolgenden Mess-Phase
- die Temperatur der Flüssigkeit erfasst wird;
- die Schallgeschwindigkeit ermittelt wird, aufgrund der jeweils aktuell in der Mess-Phase erfassten Temperatur, der in der Kalibrier-Phase ermittelten oder einer vorbekannten Art und/oder Zusammensetzung der Flüssigkeit und des vorbekannten Zusammenhangs zwischen Temperatur, Schallgeschwindigkeit und Art bzw. Zusammensetzung der Flüssigkeit.

23. Verfahren nach Anspruch 22, **dadurch gekennzeichnet, dass** in der Mess-Phase anhand der ermittelten Schallgeschwindigkeit und einer gemessenen Signallaufzeit zwischen dem Ultraschallsender (7), der Flüssigkeitsoberfläche und dem Ultraschallempfänger (7) der Abstand der Flüssigkeitsoberfläche zu dem Ultraschallsender (7) und/oder dem Ultraschallempfänger (7) und daraus die Füllstandshöhe ermittelt wird.

## Geänderte Patentansprüche

### Geänderte Patentansprüche gemäss Regel 86(2) EPÜ.

**1.** Vorrichtung zum Erfassen eines Füllstands einer Flüssigkeit in einem Behälter (1), mit
- einem Ultraschallsender (7) zum Senden von Ultraschallsignalen von unten in die Flüssigkeit; und mit
- einem Ultraschallempfänger (7) zum Empfangen von wenigstens von einer Oberfläche (2) der Flüssigkeit reflektierten Ultraschallsignalen;
**dadurch gekennzeichnet, dass**
- wenigstens ein als Festkörper ausgebildeter Haupt-Ultraschallreflektor (6) vorgesehen ist, der im Bereich eines Hauptschallkegels der Ultraschallsignale im Inneren des Behälters (1) oberhalb von dem Ultraschallsender (7) in einer Höhe angeordnet ist, die im Wesentlichen einem vorgegebenen Grenzstandpegel (2) der Flüssigkeit in dem Behälter (1) entspricht.
